(19) Europäisches Patentamt
European Patent Office
Office européen des brevets

(11) EP 1 675 038 A1

(12) DEMANDE DE BREVET EUROPEEN

(43) Date de publication:
28.06.2006 Bulletin 2006/26

(51) Int Cl.:
*G06K 9/32* (2006.01)

(21) Numéro de dépôt: 05112163.0

(22) Date de dépôt: 14.12.2005

(84) Etats contractants désignés:
AT BE BG CH CY CZ DE DK EE ES FI FR GB GR
HU IE IS IT LI LT LU LV MC NL PL PT RO SE SI
SK TR
Etats d'extension désignés:
AL BA HR MK YU

(30) Priorité: 23.12.2004 FR 0413832

(71) Demandeur: THALES
92200 Neuilly sur Seine (FR)

(72) Inventeurs:
• Delabbaye, Jean-Yves
78125 VIEILLE-EGLISE EN YVELINES (FR)
• Petit-Frere, Jacques
78670 VILLENNES SUR SEINE (FR)

(74) Mandataire: Chaverneff, Vladimir
Marks & Clerk France
31-33 Avenue Aristide Briand
94117 Arcueil Cedex (FR)

(54) **Procédé de reconnaissance d'objets à partir de signaux délivrés par des capteurs**

(57) La présente invention est relative à un procédé de reconnaissance d'objets à partir de signaux délivrés par des capteurs, selon lequel, à partir de ces signaux, on effectue un pré-traitement de normalisation et d'alignement et on organise une base de données dont chaque donnée est relative à une représentation de chaque objet à reconnaître selon une condition d'observation donnée, et il est caractérisé en ce que l'on établit des modèles par réduction desdites données pour chaque secteur d'observation et pour chaque objet à reconnaître, et on met en oeuvre des tests spécifiques d'adéquation pour accepter ou rejeter ces modèles pour chaque secteur et pour chaque objet.

EP 1 675 038 A1

**Description**

La présente invention se rapporte à un procédé de reconnaissance d'objets à partir de signaux délivrés par des capteurs.

Dans les domaines de la surveillance (air/air, air/sol, ...) comme dans celui de la frappe de précision, les systèmes d'armes opérants actuels ou d'une future génération devront acquérir la capacité d'identifier leur cible (parmi un ensemble de cibles) grâce à l'emploi de capteurs haute résolution (HR) actifs, passifs, 1 D ou 2 D.

La difficulté réside dans l'exploitation de la signature de la cible. Celle-ci est par construction de grandes dimensions (vecteur 30 x 15 pixels pour un char dont l'image recueillie par un capteur approprié a une résolution de 30 cm) et complexe à appréhender en l'absence de modèles mathématiques (projection 1 D/2 D d'objet 3 D dont l'orientation par rapport au capteur est inconnue). Il faut par conséquent faire appel à une base de données expérimentale ou synthétique pour son apprentissage.

La difficulté à laquelle sont confrontées toutes les méthodes connues de reconnaissance de formes est celle de l'apprentissage dans un espace d'observation E de grande dimension pour la reconnaissance des signatures. Cela réclame un nombre trop important d'échantillons pour apprendre et décrire les signatures dans E (phénomène appelé « curse of dimensionality ») et conduit immanquablement à la nécessité de réduire la dimension de E, opération connue sous le nom de l'extraction de discriminants ou « feature selection » en anglais mais qui est plus justement décrite par le terme de réduction de données.

La réduction de données est une étape fondamentale au sens où elle conditionne les performances de classification exprimées en termes de probabilité de bonnes classifications. Si elle est mal effectuée, on court le risque de ne pas exploiter toute l'information disponible. C'est pourquoi les caractéristiques choisies à cet effet doivent être discriminantes et exhaustives, en même temps que stables et robustes vis-à-vis de la variabilité de la signature. Loin de vérifier ces critères, leur choix est très souvent laissé à la libre appréciation de la situation par un expert.

En analyse et compression de données, on emploie souvent une méthode appelée « Analyse en Composantes Principales » (A.C.P.). Une telle méthode est utilisée par exemple dans le procédé de réjection de fouillis décrit dans le document RIZVI S A et al : « A modular clutter rejection technique for FLIR imagery using region-based principal component analysis » PATTERN RECOGNITION, ELSEVIER, KIDLINGTON, GB, Vol 35. n° 12, décembre 2002 (2002-12), pages 2895-2904, XP004379657 ISSN : 0031-3203, ainsi que dans le procédé de reconnaissance d'objets 3D décrit dans MURASE H et al : « Visual learning and recognition of 3-D objects from appearance », INTERNATIONAL JOURNAL OF COMPUTER VISION, KLUWER ACADEMIC PUBLISHERS, NORWELL, US, vol. 14, n° 1, janvier 1995 (1995-01), en particulier pages 5-24, XP000486837, ISSN : 0920-5691. Le procédé décrit dans le premier de ces documents ne s'intéresse pas à la classification (ou à l'identification) de cibles, mais uniquement à la réjection du fouillis (« clutter » en anglais) par rapport à un ensemble de cibles ayant des formes et des dimensions semblables. Le procédé décrit dans le second document précité applique l'ACP sur l'ensemble de toutes les images d'objets 3D pour différentes orientations des objets et de leur illumination.

Parmi les méthodes connues d'extraction de caractéristiques, on distingue deux types: les premières, dites globales, aboutissent à une réduction indépendante de la classe, les secondes, dites « par classe », dont le principe est d'élaborer une représentation (c'est-à-dire un modèle) propre à chaque classe entraînant une meilleure séparation de celles-ci. Cette représentation peut par ailleurs être adaptative, c'est-à-dire que ses dimensions sont fonction de la nature de la cible pour rendre mieux compte de sa complexité.

La présente invention a pour objet un procédé de reconnaissance et de classification d'objets à partir de signaux délivrés par des capteurs, ce procédé pouvant être mis en oeuvre facilement et sans recourir à des moyens trop importants, aussi bien de façon automatique qu' assistée par un opérateur au niveau de la prise de décision finale de classification.

Le procédé conforme à l'invention est un procédé de reconnaissance d'objets à partir de signaux délivrés par des capteurs, selon lequel, à partir de ces signaux, on effectue un pré-traitement de normalisation et d'alignement et on organise une base de données dont chaque donnée est relative à une représentation de chaque objet à reconnaître selon une condition d'observation donnée, et il est caractérisé en ce que l'on établit des modèles par réduction desdites données pour chaque secteur d'observation et pour chaque objet à reconnaître, et on met en oeuvre des tests spécifiques d'adéquation pour accepter ou rejeter ces modèles pour chaque secteur et pour chaque objet.

Selon une autre caractéristique de l'invention, on effectue un traitement explicite de la classe « rejet » après confirmation ou infirmation obtenue par les tests.

Selon encore une autre caractéristique de l'invention, on insère ou on supprime dans le traitement de reconnaissance un objet sans remettre en cause l'apprentissage relatif aux autres objets.

Selon encore une autre caractéristique de l'invention, on traite les cibles partiellement masquées, intentionnellement ou non, pour le capteur utilisé, en procédant à des tests d'adéquation généralisant les cas d'objets non masqués.

Selon encore une autre caractéristique de l'invention, on incorpore au traitement des informations annexes.

Ainsi, le procédé de l'invention met en oeuvre une technique de réduction de données sur une famille d'images représentant le même objet (recentré par le prétraitement), vu sous une incidence correspondant à un secteur angulaire (bidimensionnel) réduit, et sert à construire un modèle paramétrique de chaque objet pris individuellement dans un secteur angulaire donné.

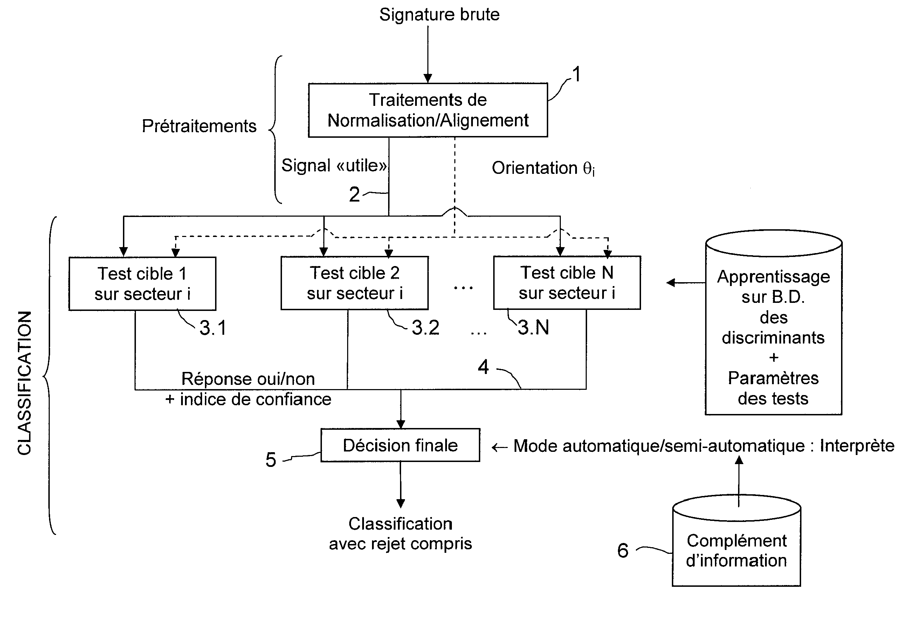

La présente invention sera mieux comprise à la lecture de la description détaillée d'un mode de réalisation, pris à titre d'exemple non limitatif et illustré par le dessin annexé, dont la figure unique est un bloc-diagramme simplifié montrant les étapes principales du procédé de l'invention.

L'objet de l'invention porte, dans l'exemple décrit ci-dessous, sur la classification, pour une mission donnée, d'un nombre connu d'objets, qui sont ici des cibles de nature connue (classification dite supervisée) à partir de leur signature, mais il est bien entendu que le procédé de l'invention peut être mis en oeuvre pour reconnaître des objets de types très différents, qu'ils soient fixes et/ou mobiles, et quel que soit le type de capteur employé pour la reconnaissance de ces objets (radar, lidar, capteur infra-rouge, ...), que la reconnaissance soit faite automatiquement ou de façon assistée par un opérateur au niveau de la prise de décision finale de classification. Le procédé de l'invention permet en plus la prise en compte d'une classe de rejet pour ne pas forcer arbitrairement la classification et offre la possibilité d'ajouter au moins une cible ou inversement d'en supprimer au moins une, sans pour autant remettre en cause l'apprentissage des autres cibles. Ceci confère à l'algorithme une certaine souplesse d'emploi.

Le mode de mise en oeuvre préféré de l'invention exploite des modèles par classe, adaptatifs, définis à partir d'une base de données (dénommée « B.D. » par la suite) et dont la formulation (du point de vue mathématique) s'appuie sur les critères de choix des discriminants précédemment évoqués.

La problématique de la reconnaissance vient de la difficulté d'interprétation de la « signature » des cibles à reconnaître compte tenu de sa très grande variabilité. Les origines de cette variabilité sont diverses : ce sont la position et l'orientation (site et gisement) de la cible qui sont inconnues, les parties cachées induites par l'orientation qui rendent compte de la géométrie 3D de la cible, les fluctuations des niveaux très sensibles en imagerie active en plus des conditions d'éclairement changeantes et le déploiement d'éléments (antennes, portes, ...) lorsque la cible est de nature articulée.

Pour chacune de ces causes de variabilité, il est nécessaire d'appliquer un traitement sur les données de façon à obtenir soit un signal invariant, c'est-à-dire robuste à toute variabilité qui ne rend pas compte de la nature de la cible, soit au contraire discriminant lorsque celle-ci s'avère être pertinente.

On va d'abord exposer la façon dont on effectue le pré-traitement des signaux délivrés par un capteur, quelle que soit sa nature (infra-rouge, radar, lidar, ...). Ce pré-traitement comporte une étape d'alignement des signaux pour s'affranchir des inconnues que sont la position et l'orientation des cibles à reconnaître, ce qui revient au choix d'une forme d'invariance. Cela passe par la détermination d'un point particulier de la cible, par exemple son barycentre, et d'un axe préférentiel tel que l'axe d'inertie ou de symétrie déterminant son orientation (à $\pi$ près).

Une autre étape du pré-traitement est un traitement de normalisation des niveaux, d'extraction des supports, des contours, de filtrage des réflecteurs, qui garantissent, suivant la nature et la qualité des signaux de réponse une robustesse vis-à-vis des conditions d'éclairement et des fluctuations de cible.

L'ensemble de ces pré-traitements aboutit à la génération des signaux dits « utiles » à la classification, c'est-à-dire des signaux réellement exploitables pour la fonction de reconnaissance de l'invention.

On procède ensuite à la modélisation du « signal utile » en vue de la détermination des paramètres de l'apprentissage subséquent, en exploitant l'information représentant la signature qui contribue à l'identification de la cible par le biais de sa géométrie 3 D (parties cachées en fonction de l'angle de présentation) ou par le biais de sa fonctionnalité (déploiement d'éléments).

La dépendance de la signature en fonction de l'angle de présentation peut difficilement être résumée par des modèles analytiques fiables. L'apprentissage au moyen d'une base de données permet par le biais de méthodes de réduction de données d'inférer ces modèles (ou représentations) desquels on déduit les paramètres nécessaires et suffisants à la reconnaissance des cibles.

Le procédé de l'invention consiste alors à inférer, à partir de la base de données, des modèles locaux, à savoir des modèles classés par secteur angulaire, qui rendent compte de manière précise du comportement de la signature de la cible et ce pour chaque cible que l'on est amené à reconnaître. Le cas d'une représentation linéaire des signaux « utiles », à savoir normalisés et alignés, sur un secteur de taille limitée, s'obtient à partir d'une analyse en composantes principales appliquée à l'ensemble des échantillons de la B.D. et décrivant une cible vue dans un secteur donné.

Soit y(x) la signature d'une cible appartenant à un secteur donné, on obtient :

$$y(x) = s_0(x) + \sum_{k=1}^{K} a_k s_k(x) + w(x)$$

avec $\mathbf{s}_0$ (.) : signal moyen au sens statistique

$\{S_k(.)\}$: base orthonormée de fonctions propres fournies par l'analyse en composantes principales dans le secteur,

$a_k$ : coefficient qui varie d'une signature de cible à une autre à l'intérieur du secteur,

$w(.)$ : résidu contrôlé (en puissance) par le rang K du modèle dans le secteur donné.

Cette représentation n'a de sens que si la puissance (ou contribution énergétique) de w (.) est négligeable devant celle de y (.). Dans ce cas, elle conduit bien à une réduction de la dimension à K+1 caractéristiques correspondant aux fonctions $S_k$ (.). Ces fonctions sont les paramètres caractéristiques relatifs à la classe définie par la cible et le secteur auquel ils s'appliquent, alors que les coefficients $a_k$ expriment la variabilité intra-classe.

D'autres méthodes de réduction de données, par exemple des méthodes de représentation non linéaires, peuvent se substituer à l'analyse en composantes principales, telle que mise en oeuvre par l'invention, pour obtenir des représentations locales. L'ensemble des représentations locales correspondant à l'ensemble des secteurs rend compte alors du type de la cible.

Une fois les représentations admises pour chacune des cibles attendues, le traitement de classification se ramène à tester si le signal « utile » observé vérifie l'un des modèles correspondants pour le secteur relatif à l'orientation estimée. Cela revient pour chaque hypothèse (ou chaque modèle) à effectuer un test d'adéquation, soit d'acceptation ou de rejet du modèle. La structure de l'algorithme reflète cette série de tests comme représenté sur la figure unique du dessin.

Sur la figure du dessin, à partir de la signature brute d'une cible à reconnaître, on procède à des pré-traitements de normalisation et d'alignement (1). On obtient ainsi le « signal utile » qui est envoyé à N modules de test (3.1 à 3.N), chacun de ces modules étant dédié à une cible et à un secteur déterminés. Les résultats (4) de chacun de ces tests, comportant une réponse OUI/NON accompagnée d'un indice de confiance exploitant la distance au sous-espace vectoriel, sont envoyés à un module (5) de décision finale. Ce module 5 peut fonctionner en mode automatique, semi-automatique ou assistée par un opérateur au niveau de la prise de décision finale de classification, et peut recevoir des compléments d'information, comme décrit ci-dessous. Comme indiqué en trait interrompu, les pré-traitements peuvent également fournir une estimée θi d'orientation de la cible par rapport au capteur. Dans ce cas, au lieu d'effectuer les tests sur l'ensemble des secteurs, on ne l'effectue que sur le secteur désigné par l'estimée d'orientation.

Le rejet est explicitement pris en compte par ce type de tests. La décision finale de rejeter une signature est prise lorsque chaque test d'adéquation local a décidé de rejeter son modèle.

Le test d'adéquation mis en oeuvre est d'un genre particulier. Dans le cas d'une représentation linéaire, il s'écrit en notant H : acceptation de la classe et Ho : son rejet :

$$H : y(\mathbf{x}) = \mathbf{s}_0(\mathbf{x}) + \sum_{k=1}^{K} a_k s_k(\mathbf{x}) + w(\mathbf{x})$$

$$H_0 : y(\mathbf{x}) = \varphi(\mathbf{x}) + w(\mathbf{x})$$

Dans ces expressions, on a :

y (.) : le signal utile estimé obtenu à partir des traitements classiques de normalisation et d'alignement

$S_k$ : les fonctions relatives au modèle testé

$\varphi$ (.) : une fonction quelconque ne vérifiant pas le modèle de la classe

w (.) : un bruit de mesure et d'imperfection du modèle.

Ce type de test permet une désensibilisation par rapport aux tests d'adéquation plus classiquement employés en statistique (Tests de Kolmogorov-Smirnov, Chi 2), mais qui ont tendance à rejeter abusivement l'hypothèse d'acceptation H lorsque celle-ci n'est pas rigoureusement vérifiée. Sa mise en oeuvre aboutit à calculer la distance de y (.) au sous-espace vectoriel engendré par les $S_k$ (.) et à la comparer à un seuil fixé : si cette distance est supérieure au seuil, on rejette le modèle décrit par H, dans le cas contraire, on accepte ledit modèle. Le seuil peut être réglé de manière à garantir une probabilité donnée de faux rejet de l'hypothèse H. Cette probabilité de faux rejet constitue le seul paramètre du test à régler.

Selon une autre caractéristique du procédé de l'invention, on peut étendre la méthode de test en effectuant une généralisation de ces tests particuliers aux cas des cibles partiellement masquées ou leurrées. Cette généralisation implique une modification de l'hypothèse H (acceptation de la classe) dans l'expression du test d'adéquation, qui devient :

$$H : y(x) = \varepsilon(x)\left[s_0(x) + \sum_{k=1}^{K} a_k s_k(x)\right] + (1 - \varepsilon(x))\xi(x) + w(x)$$

$$H_0 : y(x) = \varphi(x) + w(x)$$

Avec $\varepsilon(.)$ : une fonction indicatrice inconnue qui prend la valeur 0 sur le pixel x dans le cas de la présence d'un masquage, sinon la valeur 1 ;

$\xi(.)$ : une fonction quelconque qui, comme la fonction $\varphi(.)$ dans H0 ne vérifie pas le modèle.

Les deux hypothèses se distinguent à la condition que $\varepsilon(x)$ ne soit pas égal à zéro sur l'ensemble de l'image, auquel cas (qui est celui du problème de la reconnaissance de la cible complètement masquée) le test n'a pas de sens.

La mise en oeuvre de ce type de test aboutit également au calcul d'une distance d'une fraction de la contribution de y(.), qui correspond au modèle de la cible, au sous-espace engendré par les $S_k(.)$. Le calcul de cette distance passe par l'évaluation conjointe de la fonction $\varepsilon(.)$ et des $a_k$. On calcule la distance entre les signaux $\varepsilon(.)y(.)$ et

$\varepsilon(.)\left[s_0(.) + \sum_{k=1}^{K} a_k s_k(.)\right]$, qui correspond à la norme quadratique du signal différence

$\varepsilon(.)\left[y(.) - s_0(.) - \sum_{k=1}^{K} a_k s_k(.)\right]$. Les $a_k$ sont solution d'un système d'équations sous la forme :

$$\sum_{x} s_k(x) \Phi\left(y(x) - s_0(x) - \sum_{k=1}^{K} a_k s_k(x)\right),$$

où $\Phi(.)$ est une fonction réelle d'une variable réelle, impaire avec un comportement linéaire au voisinage [-B, +B] et tendant vers 0 à l'infini.

Le support de $\varepsilon(.)$ est l'ensemble des pixels x pour lesquels $y(x) - s_0(x) - \sum_{k=1}^{K} a_k s_k(x)$ appartient au voisinage [-B, +B]. Il s'agit d'une généralisation de la mise en oeuvre du premier test pour lequel la fonction $\Phi(.)$ vaut l'identité et le support de $\varepsilon(.)$ correspond au domaine entier de l'image. La distance ainsi obtenue est comparée à un seuil fixé pour garantir une probabilité donnée de faux rejet de l'hypothèse H.

L'intérêt de ce type de test, outre l'avantage de garantir une bonne décision dans le cas de leurre intentionnel sur la cible, est de rendre plus robuste la prise de décision dans le cas d'erreurs partielles sur l'extraction de la signature de la cible (erreur de segmentation du signal cible par rapport au fond et/ou à l'environnement).

Quel que soit le type de test envisagé, la structure du traitement de classification reste la même.

Le traitement de classification a pour données d'entrée le signal « utile » et l'orientation estimée. Sa mise en oeuvre passe par l'emploi d'une série de modules-tests relatifs aux cibles attendues pour le secteur concerné (relatif à l'orientation estimée de la cible). La suppression ou l'insertion d'une cible équivaut au retrait ou à l'ajout de modules. Les sorties acceptation/rejet de chaque module-test sont accompagnées d'indices de confiance (c'est-à-dire les distances aux sous-espaces vectoriels représentatifs de chacune des classes dans l'exemple d'une représentation linéaire). Ces indices ordonnent les réponses des différents modules. Ils peuvent être mis à disposition d'un interprète pour être confrontés à des compléments d'information (mode assisté ou semi-automatique) ou bien servir à retenir la cible ayant le meilleur indice (mode automatique). C'est l'objet du module intitulé décision finale.

Selon une autre caractéristique de l'invention, le procédé s'applique aux cibles articulées. Il faut distinguer le cas où l'élément déployé peut prendre de manière continue toutes les poses que lui permettent ses axes d'évolution (par exemple le canon d'un char), du cas où l'élément ne peut se trouver que dans un nombre limité d'états (par exemple une antenne ouverte ou fermée).

Dans le premier cas, la variabilité de poses de l'élément s'ajoute à celle propre à la cible et la prendre en compte consiste à renseigner la B.D. d'images la caractérisant.

Dans le second cas, selon l'importance énergétique de l'élément déployé, soit la contribution peut être assimilée au résidu du modèle si celle-ci est relativement faible, soit il est nécessaire de considérer la cible articulée avec son élément déployé comme une classe à part entière.

De façon avantageuse, le procédé de l'invention utilise des informations annexes de classification. L'introduction de résultats de classification obtenus par d'autres capteurs ou à des temps différés (en préparation de mission, avant le tir du missile) est exportable dans des schémas bayésiens par le biais de probabilités *a priori*.

Le procédé de l'invention inclut également l'inférence de modèles pour des classes fonctionnelles. A partir de modèles locaux décrivant une cible (char-T 80 par exemple), il est possible, en concaténant ou « recollant » par lissage les modèles locaux, de définir des modèles globaux de classe fonctionnelle (char, véhicule de transport, avion de ligne).

En conclusion, l'objet de l'invention est la classification supervisée de cibles à partir de signaux délivrés par des capteurs haute résolution. La solution de l'invention est de décrire la dépendance de la signature en fonction de la présentation de la cible par des modèles locaux, c'est-à-dire associés à des secteurs angulaires, et ce pour chaque cible attendue. La construction de ces modèles s'obtient à partir d'une Base de Données et relève des techniques de l'analyse de données. Le traitement de classification se ramène à une série de tests spécifiques d'adéquation/rejet de chaque modèle permettant le rejet d'une signature comme la possibilité d'insérer de nouvelles cibles sans revenir sur les apprentissages préalablement effectués.

## Revendications

1. Procédé de reconnaissance d'objets à partir de signaux délivrés par des capteurs, selon lequel, à partir de ces signaux, on effectue un pré-traitement de normalisation et d'alignement et on organise une base de données dont chaque donnée est relative à une représentation de chaque objet à reconnaître selon une condition d'observation donnée, **caractérisé en ce que** l'on établit des modèles par réduction desdites données pour chaque secteur d'observation et pour chaque objet à reconnaître, et on met en oeuvre des tests spécifiques d'adéquation pour accepter ou rejeter ces modèles pour chaque secteur et pour chaque objet.

2. Procédé selon la revendication 1, **caractérisé par le fait que** la réduction de données est effectuée par une analyse en composantes principales appliquée à l'ensemble des échantillons de la base de données décrivant un objet vu dans un secteur donné.

3. Procédé selon la revendication 1 ou 2, **caractérisé en ce que** l'on effectue un traitement explicite de la classe « rejet » après confirmation ou infirmation obtenue par les tests.

4. Procédé selon l'une des revendications précédentes, **caractérisé en ce que** l'on insère ou l'on supprime dans le traitement de reconnaissance au moins un objet sans remettre en cause l'apprentissage relatif aux autres objets.

5. Procédé selon l'une des revendications précédentes, **caractérisé en ce que** l'on traite les cibles partiellement masquées, intentionnellement ou non, pour le capteur utilisé en procédant à des tests d'adéquation généralisant les cas d'objets non masqués.

6. Procédé selon l'une des revendications précédentes, **caractérisé en ce que** l'on incorpore au traitement des informations annexes.

7. Procédé selon l'une des revendications précédentes, **caractérisé en ce que** la décision finale de classification est faite de façon automatique.

8. Procédé selon l'une des revendications 1 à 6, **caractérisé en ce que** la décision finale de classification est faite de façon semi-automatique.

Signature brute

Prétraitements

Traitements de
Normalisation/Alignement — 1

Signal «utile»            Orientation $\theta_i$

2

CLASSIFICATION

Test cible 1
sur secteur i — 3.1

Test cible 2
sur secteur i — 3.2

...

Test cible N
sur secteur i — 3.N

...

Apprentissage
sur B.D.
des
discriminants
+
Paramètres
des tests

Réponse oui/non
+ indice de confiance

4

5 — Décision finale   ← Mode automatique/semi-automatique : Interprète

Classification
avec rejet compris

6 — Complément
d'information

EP 1 675 038 A1

**Office européen
des brevets**

## RAPPORT DE RECHERCHE EUROPEENNE

Numéro de la demande

EP 05 11 2163

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | RIZVI S A ET AL: "A modular clutter rejection technique for FLIR imagery using region-based principal component analysis" PATTERN RECOGNITION, ELSEVIER, KIDLINGTON, GB, vol. 35, no. 12, décembre 2002 (2002-12), pages 2895-2904, XP004379657 ISSN: 0031-3203 2. Proposed technique; 3. Region based PCA<br>----- | 1-7 | G06K9/32 |
| Y | VERLY J G ET AL: "MACHINE INTELLIGENCE TECHNOLOGY FOR AUTOMATIC TARGET RECOGNITION" THE LINCOLN LABORATORY JOURNAL, NEW YORK,NY, US, vol. 2, no. 2, 1989, pages 277-311, XP000619064 p. 288 "Model librray", p. 289 "Matching, p. 308 Appendix: Elements of the Dempster-Shafer theory of evidence<br>----- | 1-7 | |
| | | | **DOMAINES TECHNIQUES RECHERCHES (IPC)** |
| Y | MURASE H ET AL: "VISUAL LEARNING AND RECOGNITION OF 3-D OBJECTS FROM APPEARANCE" INTERNATIONAL JOURNAL OF COMPUTER VISION, KLUWER ACADEMIC PUBLISHERS, NORWELL, US, vol. 14, no. 1, janvier 1995 (1995-01), pages 5-24, XP000486837 ISSN: 0920-5691 2. Visual learning of objects<br>-----<br><br>-/-- | 1-7 | G06K<br>G01S |

Le présent rapport a été établi pour toutes les revendications

| Lieu de la recherche | Date d'achèvement de la recherche | Examinateur |
|---|---|---|
| La Haye | 30 mars 2006 | Grigorescu, C |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

8

**Office européen des brevets**

**RAPPORT DE RECHERCHE EUROPEENNE**

Numéro de la demande

EP 05 11 2163

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CROWLEY J L ET AL: "Position estimation using principal components of range data" ROBOTICS AND AUTOMATION, 1998. PROCEEDINGS. 1998 IEEE INTERNATIONAL CONFERENCE ON LEUVEN, BELGIUM 16-20 MAY 1998, NEW YORK, NY, USA,IEEE, US, vol. 4, 16 mai 1998 (1998-05-16), pages 3121-3128, XP010281350 ISBN: 0-7803-4300-X * le document en entier * ----- | 1-7 | |
| A | D. MANOLAKIS ET AL.: "Hyperspectral subpixel target detection using the linear mixing model" IEEE TRANS. GEOSCIENCE AND REMOTE SENSING, vol. 39, no. 7, juillet 2001 (2001-07), pages 1392-1409, XP002341792 * le document en entier * ----- | 1-7 | |
| A | FR 2 744 222 A (OFFICE NATIONAL D'ETUDES ET DE RECHERCHES AEROSPATIALES) 1 août 1997 (1997-08-01) * le document en entier * ----- | 1-7 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 30 mars 2006 | Grigorescu, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 11 2163

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-03-2006

| Document brevet cité au rapport de recherche | Date de publication | Membre(s) de la famille de brevet(s) | Date de publication |
|---|---|---|---|
| FR 2744222 A | 01-08-1997 | AUCUN | |

EPO FORM P0460

Pour tout renseignement concernant cette annexe : voir Journal Officiel de l'Office européen des brevets, No.12/82